# EUROPÄISCHE PATENTSCHRIFT

(11) **EP 1 366 559 B1**
(45) Veröffentlichungstag und Bekanntmachung des Hinweises auf die Patenterteilung: **18.07.2007**
(21) Anmeldenummer: 02714059.9
(22) Anmeldetag: 22.02.2002
(51) Int. Cl.: H02K 55/04

(54) **MASCHINE MIT EINER IN EINEM WICKLUNGSTRÄGER ANGEORDNETEN SUPRALEITENDEN WICKLUNG SOWIE MIT MITTELN ZUR DREHMOMENTÜBERTRAGUNG VON DEM WICKLUNGSTRÄGER AUF EINEN WELLENTEIL**
ENGINE WITH A SUPERCONDUCTIVE WINDING ARRANGED IN A WINDING SUPPORT AND MEANS FOR TRANSMITTING TORQUE FROM THE WINDING SUPPORT TO A SHAFT PART
MACHINE COMPORTANT UN ENROULEMENT SUPRACONDUCTEUR DISPOSE DANS UN SUPPORT D'ENROULEMENT ET DES MOYENS POUR LA TRANSMISSION DE COUPLE ENTRE CE SUPPORT D'ENROULEMENT ET UNE PARTIE DE L'ARBRE ROTOR

(30) Priorität: 06.03.2001 DE 10110674
(43) Veröffentlichungstag der Anmeldung: 03.12.2003
(73) Patentinhaber: SIEMENS AKTIENGESELLSCHAFT, 80333 München (DE)
(72) Erfinder: BOSS, Markus, 90556 Cadolzburg (DE); FRANK, Michael, 91080 Uttenreuth (DE); KÜHN, Adolf, 90552 Röthenbach (DE); MASSEK, Peter, 91301 Forchheim (DE); NICK, Wolfgang, 90419 Nürnberg (DE); VAN HASSELT, Peter, 91058 Erlangen (DE)
(86) Internationale Anmeldenummer: PCT/DE2002/000667
(87) Internationale Veröffentlichungsnummer: WO 2002/071584

(56) Entgegenhaltungen:
- US-A- 5 880 547
- US-A- 6 129 477

## Beschreibung

Maschine mit einer in einem Wicklungsträger angeordneten supraleitenden Wicklung sowie mit Mitteln zur Drehmomentübertragung von dem Wicklungsträger auf einen Wellenteil

Die Erfindung bezieht sich auf eine Maschine mit einem um eine Rotationsachse drehbar gelagerten Rotor, der ein Rotoraußengehäuse hat, das an axialen Rotorwellenteilen befestigt ist und einen Wicklungsträger mit einer supraleitenden Wicklung umschließt. Der Rotor weist ferner Mittel zur Halterung des Wicklungsträgers innerhalb des Rotoraußengehäuses auf, die auf einer drehmomentübertragenden Seite eine starre Verbindungseinrichtung zwischen dem Wicklungsträger und dem zugeordneten Rotorwellenteil mit mindestens einem drehmomentübertragenden hohlzylindrischen Verbindungselement aus einem faserverstärkten Kunststoff umfassen. Ferner sind Mittel zur Kühlung und thermischen Isolation der supraleitenden Wicklung vorgesehen. Eine entsprechende Maschine geht aus der US 5,880,547 A hervor.

Ferner ist eine ähnliche Maschine aus US 6 129 477 bekannt.

Elektrische Maschinen, insbesondere Generatoren oder Motoren, besitzen in der Regel eine rotierende Feldwicklung und eine feststehende Ständerwicklung. Durch die Verwendung von tiefgekühlten und insbesondere supraleitenden Leitern kann man dabei die Stromdichte und dadurch die spezifische Leistung der Maschine, d.h. die Leistung pro Kilogramm Eigengewicht, erhöhen und auch den Wirkungsgrad der Maschine steigern.

Tiefkalte Wicklungen elektrischer Maschinen müssen im allgemeinen von der Umgebung thermisch isoliert und mit einem Kühlmittel auf der geforderten Tieftemperatur gehalten werden. Eine effektive Wärmeisolation kann dabei nur erreicht werden, wenn die tiefkalten Teile der Maschine von dem warmen Außenraum möglichst durch ein Hochvakuum mit einem Restgasdruck im allgemeinen unter 10⁻³ mbar getrennt sind und wenn Verbindungsteile zwischen diesen tiefkalten Teilen und dem warmen Außenraum möglichst wenig Wärme übertragen.

Für eine Vakuumisolation von Rotoren mit tiefzukühlenden Läuferwicklungen und warmen Ständerwicklungen sind insbesondere zwei Varianten bekannt: Bei einer ersten Ausführungsform hat der Rotor ein warmes Außengehäuse und einen mitrotierenden abgeschlossenen Vakuumraum. Der Vakuumraum sollte dabei den tiefkalten Bereich allseitig umgeben (vgl. z.B. "Siemens Forsch. u. Entwickl.-Ber.", Bd. 5, 1976, No. 1, Seiten 10 bis 16). Über sich durch den Vakuumraum erstreckende Abstützungen erfolgt jedoch eine unerwünschte Übertragung von Wärme auf die tiefkalten Teile. Bei einer zweiten Ausführungsform rotiert der im wesentlichen kalte Rotor in einem Hochvakuum. Dabei wird die äußere Begrenzung des Hochvakuumraumes durch die Innenbohrung des Ständers festgelegt. Eine solche Anordnung erfordert jedoch hochvakuumdichte Wellendichtungen zwischen dem Rotor und dem Ständer (vgl. z.B. DE 27 53 461 A).

Bei der aus der eingangs genannten US-A-Schrift entnehmbaren Maschine ist die erstgenannte Ausführungsform realisiert. Bei ihrem Rotor befindet sich die supraleitende Wicklung im Inneren eines Läuferkryostaten, der mit angebrachten Flanschwellen ein Außengehäuse des Rotors bildet. Für die Supraleiter der Wicklung ist eine Heliumkühlung vorgesehen. Demgegenüber befindet sich die Außenkontur des Rotoraußengehäuses etwa auf Raumtemperatur und im Betrieb auch gegebenenfalls darüber. Das Nutzdrehmoment der Maschine wird in der Rotorwicklung erzeugt. Diese ist in einem kalten Wicklungsträger angeordnet, der seinerseits isoliert in dem als Kryostaten wirkenden Rotoraußengehäuse aufgehängt bzw. gehaltert ist. Dabei muss diese Aufhängung bzw. Halterung auf der Antriebsseite des Rotors, die häufig als A-Seite der Maschine bezeichnet wird, stabil genug sein, um das Drehmoment von dem kalten Wicklungsträger auf einen antriebsseitigen Wellenteil zu übertragen. Eine entsprechende, starre Verbindungseinrichtung zur Drehmomentübertragung muss daher verhältnismäßig massiv dimensioniert und kraftschlüssig mit dem Wicklungsträger und dem antriebsseitigen Wellenteil verbunden werden. Dadurch bedingt kommt es zu einer unvermeidlichen Wärmeeinleitung in den kalten Bereich des Rotors. Häufig sieht man sieht sich deshalb zu einer Kühlung der Verbindungseinrichtung veranlasst ( vgl. z.B. "Handbook of Applied Superconductivity", Vol. 2: Ed.: B.Seeber, Institute of Physics Publishing, Bristol (GB), 1998, Seiten 1497 bis 1499 und 1522 bis 1530). Zugleich übernimmt diese Verbindungseinrichtung auch die antriebsseitige Zentrierung des kalten Wicklungsträgers. Auf der gegenüberliegenden Rotorseite, die auch als Nichtantriebs- oder allgemein auch als B-Seite bezeichnet wird, weil an ihr für einen Betrieb der Maschine wichtige Verbindungen wie z.B. eine Kühlmittelzufuhr vorgesehen sind, wird praktisch kein Drehmoment ausgeleitet. Daher sind hier im wesentlichen nur die Funktionen einer Zentrierung und thermischen Isolierung zu erfüllen. Darüber hinaus müssen dort Maßnahmen zu einem Ausgleich der Schrumpfung des abgekühlten Wicklungsträgers vorhanden sein.

Zur Verminderung der Wärmeeinleitung in den gekühlten Supraleitungsbereich des Rotors ist bei einer speziellen Ausführungsform der bekannten Maschine vorgesehen, dass zumindest auf der Antriebsseite die drehmomentübertragende Verbindungseinrichtung ein hohlzylindrisches Verbindungselement aus einem glasfaserverstärkten Kunststoff aufweist. Dieser Hohlzylinder ist an seinen beiden axialen Enden jeweils mit einem Kopplungselement aus Stahl versehen, das mit dem Wicklungsträger bzw. der Antriebswelle kraftschlüssig verbunden ist. Die mechanische Verbindung zwischen dem Hohlzylinder aus Kunststoff und den Kopplungselementen aus Stahl muss eine hohe Überlastfestigkeit und Dauerfestigkeit bei wechselnden Beanspruchungen gewährleisten, da beispielweise beim Anlaufen bzw. bei verschiedenen Störfällen an solchen Motoren deutlich höhere Momente als im normalen Betriebsfall auftreten, die nicht zu einer Schädigung der Verbindungseinrichtung führen dürfen. Die US-A-Schrift enthält jedoch keine Einzelheiten bezüglich der Verbindung zwischen dem Hohlzylinder und den Kopplungselementen.

Neben den seit langem bekannten metallischen Supraleitermaterialien wie z.B. NbTi oder Nb₃Sn, wie sie bei den vorstehend erwähnten Maschinen eingesetzt werden, sind seit 1987 auch metalloxidische Supraleitermaterialien mit Sprungtemperaturen von über 77 K bekannt. Mit Leitern unter Verwendung solcher Hoch(High)-T_{c}-Supraleitermaterialien, die auch als HTS-Materialien bezeichnet werden, versucht man, supraleitende Wicklungen von Maschinen zu erstellen (vgl. z.B. WO98/02953). Auch Maschinen mit diesem Leitertyp erfordern auf Grund der Temperaturunterschiede zwischen der Betriebstemperatur des Supraleitermaterials und der Außentemperatur des wärmeren Rotoraußengehäuses Maßnahmen zur Verminderung der Temperatureinleitung in den Supraleitungsbereich.

Aufgabe der vorliegenden Erfindung ist es, für eine Maschine mit den eingangs genannten Merkmalen eine geeignete Verbindungseinrichtung zur Drehmomentübertragung anzugeben, die auf verhältnismäßig einfache Weise eine kraftschlüssige , eine hohe Dauer- und Überlastfestigkeit gewährleistende Verbindung zwischen dem kalten Wicklungsträger und dem zugeordneten warmen Rotorwellenteil ermöglicht und dabei Wärmeleitungsverluste zum kalten Wicklungsträger begrenzt.

Diese Aufgabe wird erfindungsgemäß mit den Merkmalen des Anspruchs 1 gelöst. Dementsprechend sollen bei der Maschine mit den eingangs genannten Merkmalen
das Verbindungselement einstückig aus stirnseitigen Endteilen und einem dazwischen liegenden Mittelteil bestehen, die Endteile in Umfangsrichtung gesehen eine Wellenform aufweisen, während der Mittelteil ungewellt sein soll,
das Verbindungselement an den Endteilen mit flanschartigen Endstücken aus Metall kraftschlüssig ineinander greifend verbunden sein, wobei
- α): die Endteile vollständig und der Mittelteil jeweils ein Stückweit in nutartige Ausnehmungen des jeweiligen flanschartigen Endstücks hineinragen,
- β): zumindest eine Seitenwand jeder Ausnehmung eine an die Wellenform des jeweiligen Endteils angepasste Wellenform aufweist,
- γ): jeder Endteil wenigstens teilweise mit seiner Wellenform an der Wellenform der Seitenwand der entsprechenden Ausnehmung anliegt, und
- δ): die in den Ausnehmungen angeordneten Teile des Verbindungselementes mittels einer zumindest teilweisen Füllung der verbleibenden Räume der Ausnehmungen fixiert sind.

Außerdem sollen bei der Maschine die flanschartigen Endstücke mit einem zugehörenden Teil des Wicklungsträgers bzw. einem mit dem Rotorwellenteil verbundenen Seitenteil des Rotoraußengehäuses kraftschlüssig zu verbinden sein.

Die mit dieser Ausgestaltung der Maschine verbundenen Vorteile sind darin zu sehen, dass durch die besondere Ausgestaltung des hohlzylindrischen Verbindungselementes zumindest im Bereich seiner stirnseitigen Endteile und wegen der entsprechenden Gestaltung der flanschartigen Endstücke im Verbindungsbereich mit diesen Endteilen eine gute kraftschlüssige Verbindung zwischen dem schlecht wärmeleitenden Teil des hohlzylindrischen Verbindungselementes und den Metallteilen des Wicklungsträgers erreicht wird. Dabei werden vorteilhaft im Verbindungsbereich zwischen Kunststoff und Metall, der ansonsten eine Schwachstelle der Drehmomentübertragung darstellt, Probleme der Scherfestigkeit insbesondere bzgl. Überlast und im Dauerbetrieb umgangen, indem das Moment nunmehr in den nutenartigen Aussparungen in erster Linie durch Druck und weniger durch Scherung übertragen wird. Zur Verbesserung des Kraftschlusses kann das Verbindungselement mit den flanschartigen Endstücken verklebt sein. Dabei werden die Endteile in den nutartige Ausnehmungen des jeweiligen flanschartigen Endstücks mittels der Füllung quasi verkeilt. Denn die entsprechenden Keile aus dem Füllungsmaterial wie z.B. aus einem aushärtbaren Kunststoff füllen dann zumindest weitgehend die Zwickelräume zwischen den gewellten Endteilen und den Seitenwänden der nutenartigen Ausnehmungen aus. Mit einer solchen Verkeilung wird nicht nur ein Herausrutschen des Verbindungselementes aus den Ausnehmungen verhindert; vielmehr wird dadurch auch im Verbindungsbereich "Metall-Kunststoff" die Kraftübertragung mittels Druckkräften statt durch Scherkräfte verbessert.

Mit der Wellung der wenigstens einen Seitenwand jeder Aussparung und dem Formschluss mit dem jeweiligen, entsprechend gewellten Endteil ist in Umfangsrichtung gesehen eine besonders gleichmäßige Verteilung der Kräfte bei der Drehmomentübertragung zu gewährleisten. Da zusätzlich das ungewellte, als glatter Hohlzylinder ausgebildete Mittelteil des Verbindungselementes ein Stückweit ebenfalls in jede der Aussparungen hineinragt und dort fixiert und somit mit dem jeweiligen Endstück aus Metall kraftschlüssig verbunden ist, wird eine besondere Belastung des Übergangsbereichs zwischen dem gewellten Endteil und dem ungewellten Mittelteil vermieden. Die ungewellte Ausbildung des Mittelteils hilft vorteilhaft die Gefahr einer Beulung dieses Teils zu vermindern.

Vorteilhafte Ausgestaltungen der erfindungsgemäßen Maschine gehen aus den abhängigen Ansprüchen hervor.

So ist es als besonders vorteilhaft anzusehen, wenn eine über den Umfang gleichmäßig verteilte Wellenform der Endteile vorgesehen wird. Dabei kann vorzugsweise die Wellenform sinusartig sein. Mit einer solchen Ausgestaltung der Endteile und damit der mindestens einen Seitenwand der jeweils zugeordneten nutenartigen Ausnehmung ist eine besonders gleichmäßige Kraftübertragung zwischen diesen Teilen zu gewährleisten.

Ferner ist es besonders vorteilhaft, wenn sich zumindest der größere Teil (d.h. mehr als die Hälfte) der Fasern des Fasermaterials ununterbrochen über jeden Übergangsbereich zwischen dem jeweiligen Endteil und dem Mittelteil des Verbindungselementes erstreckt. Denn über diese Bereiche durchgehende Fasern tragen zu einer hohen kräftemäßigen Belastbarkeit dieser an sich kritischen Bereiche bei. Als Fasern kommen bekannte Fasermaterialien, insbesondere Glasfasern oder Kohlenstofffasern in Frage.

Zur Verbesserung des Kraftschlusses und zu einer guten Drehmomentübertragung zwischen den flanschartigen Endstücken und dem Wicklungsträger bzw. dem antriebsseitigen Rotorwellenteil sind vorteilhaft die Endstücke jeweils mit einer stirnseitigen Verzahnung versehen, die in eine entsprechende Verzahnung des jeweiligen Gegenstückes eingreift. Die Verzahnung kann dabei in sich selbst sichernder Weise ausgebildet sein. Entsprechende Verzahnungen sind an sich bekannt.

Für die Leiter der supraleitenden Wicklung kommt entweder metallisches Niedrig-T_{c}-Supraleitermaterial oder insbesondere metalloxidisches Hoch-T_{c}-Supraleitermaterial in Frage. Durch die Verwendung des letztgenannten Materials wird die Kühltechnik vereinfacht.

Weitere vorteilhafte Ausgestaltungen der erfindungsgemäßen Maschine sind Gegenstand der restlichen Unteransprüche.

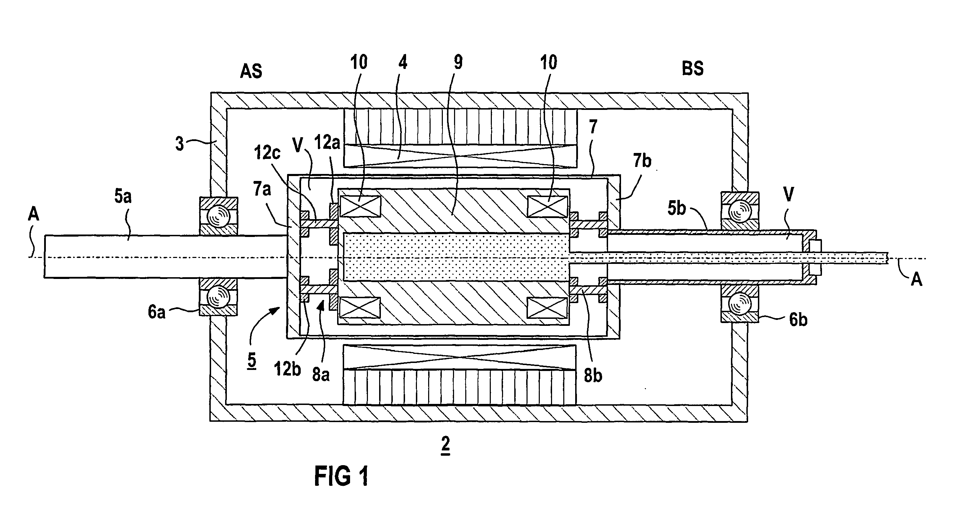

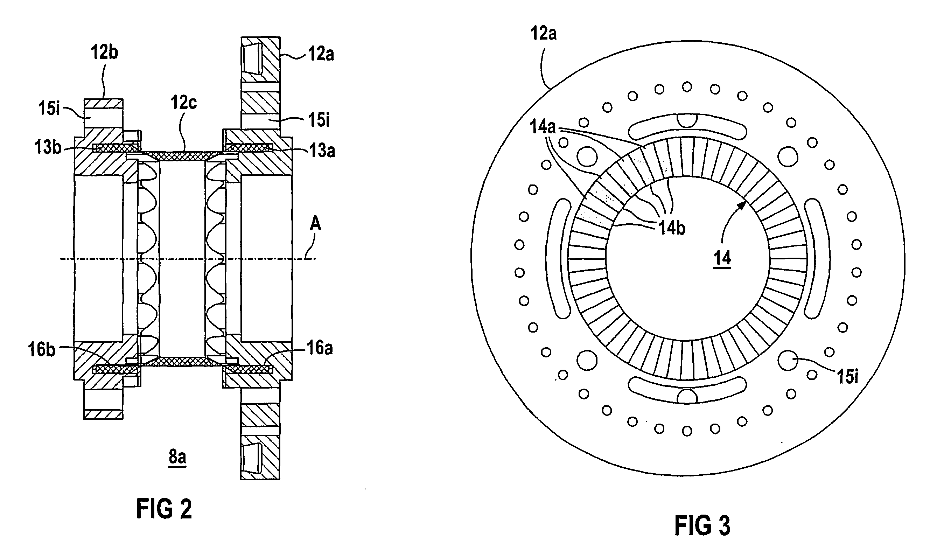

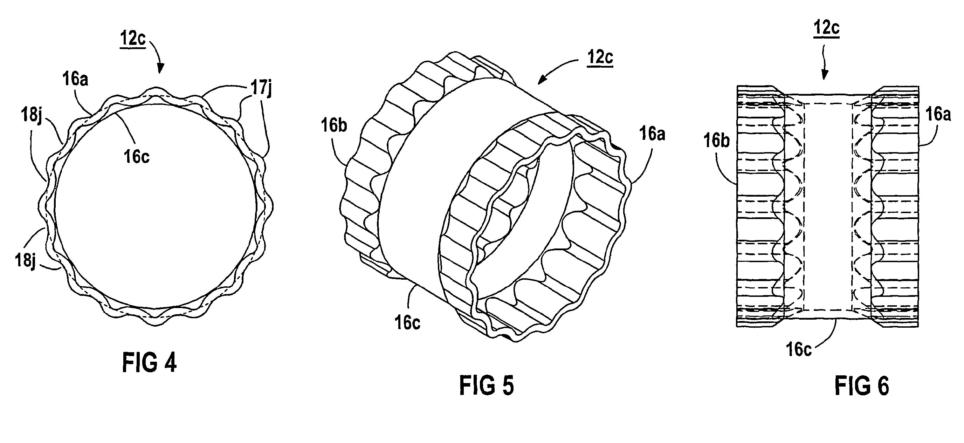

Ein bevorzugtes Ausführungsbeispiel einer Maschine nach der Erfindung wird nachfolgend an Hand der Zeichnung noch weiter erläutert. Dabei zeigen jeweils schematisch
- deren Figur 1: eine mögliche Ausführungsform der Maschine in einem Längsschnitt,
- deren Figur 2: eine spezielle Ausgestaltung einer Verbindungseinrichtung dieser Maschine in einem Längsschnitt,
- deren Figur 3: eine Frontansicht auf ein flanschartiges Endstück der Verbindungseinrichtung nach Figur 2,
sowie
- deren Figuren 4 bis 6: eine Frontansicht bzw. eine Schrägansicht bzw. eine Längsschnittansicht eines Verbindungselementes der Verbindungseinrichtung nach Figur 2.

In den Figuren sind sich entsprechende Teile mit denselben Bezugszeichen versehen.

Bei der nachfolgend angedeuteten Ausführungsform der Maschine kann es sich insbesondere um einen Synchron-Motor oder einen Generator handeln. Selbstverständlich sind auch andere Anwendungs- bzw. Einsatzgebiete entsprechender Maschinen wie für hohe Drehzahlen, kompakte Antriebe z.B. von Schiffen oder für sogenannte Offshore-Einrichtungen wie z.B. Bohrplattformen möglich. Die erfindungsgemäße Maschine umfasst eine rotierende, supraleitende Wicklung, die prinzipiell eine Verwendung von metallischem LTS-Material (Niedrig-T_{c}-Supraleitermaterial) oder insbesondere oxidischem HTS-Material (Hoch-T_{c}-Supraleitermaterial) gestattet. Letzteres Material sei für das nachfolgende Ausführungsbeispiel ausgewählt. Die Wicklung kann aus einer Spule oder einem System von Spulen in einer zwei-, vier- oder sonstigen mehrpoligen Anordnung bestehen. Der prinzipielle Aufbau einer solchen Synchronmaschine geht aus Figur 1 hervor, wobei von bekannten Ausführungsformen solcher Maschinen ausgegangen wird (vgl. z.B. den vorstehend genannten Stand der Technik).

Die allgemein mit 2 bezeichnete Maschine umfasst ein feststehendes, auf Raumtemperatur befindliches Maschinenaußengehäuse 3 mit einer Ständerwicklung 4 darin. Innerhalb dieses Außengehäuses und von der Ständerwicklung 4 umschlossen ist ein Rotor 5 drehbar um eine Rotationsachse A in Lagern 6a und 6b gelagert. Hierzu weist der Rotor ein als Vakuumgefäß gestaltetes Rotoraußengehäuse 7 auf, in dem ein Wicklungsträger 9 mit einer HTS-Wicklung 10 gehaltert ist. Dieses Rotoraußengehäuse umfasst an seinen axial gegenüberliegenden (Stirn-) Seiten jeweils einen scheiben- oder ringscheibenförmig gestalteten Seitenteil 7a bzw. 7b. Jeder dieser Seitenteile ist mit einem massiven axialen Rotorwellenteil 5a bzw. 5b starr verbunden, wobei jedem Rotorwellenteil eines der Lager 6a bzw. 6b zugeordnet ist. Auf der sogenannten Antriebsseite AS des Rotoraußengehäuses 7 ist eine starre, rohrförmige Verbindungseinrichtung 8a zwischen dem Wicklungsträger 9 und dem scheibenförmigen, mit dem Rotorwellenteil 5a fest verbundenen scheibenförmigen Seitenteil 7a des Rotoraußengehäuses vorgesehen. Über die erfindungsgemäß gestaltete, starre Verbindungseinrichtung 8a mit stirnseitig flanschartigen Endstücken 12a und 12b sowie einem dazwischen verlaufenden Verbindungselement 12c (vgl. Figur 2) erfolgt auch die Drehmomentübertragung. Vorteilhaft besteht die Verbindungseinrichtung im Wesentlichen aus einem schlecht-wärmeleitenden Hohlzylinder, der aus einem mit Fasern wie beispielweise mit Glasfasern verstärkten Kunststoffmaterial (sogenanntes "GFK"-Material) besteht. Dabei sind in an sich bekannter Weise die Fasern in das für sie als Matrix dienende, unter Festigkeitsgesichtspunkten ausgewählte Kunststoffmaterial gelegt. Die Fasern verlaufen dabei in dem Kunststoffmaterial vorteilhaft schräg bzgl. der Rotationsachse A, also nicht parallel oder senkrecht dazu. Gegebenenfalls können sie sich auch in verschiedenen Lagen befinden, wobei ihre Winkel bzgl. der Achse auch unterschiedlich sein können. Das so gebildete Verbundmaterial gewährleistet dann eine für die Drehmomentübertragung hinreichend große mechanische Steifigkeit und großen Schubmodul (G-Modul) bei gleichzeitig geringer Wärmeleitfähigkeit. Weitere Einzelheiten der Verbindungseinrichtung sind in Figur 2 dargestellt. Wie ferner aus Figur 1 hervorgeht, ist auf der der Antriebsseite AS gegenüberliegenden, nachfolgend mit BS bezeichneten Nichtantriebsseite eine weitere Verbindungseinrichtung 8b zwischen dem Wicklungsträger 9 und dem scheibenförmigen Seitenteil 7b des Rotoraußengehäuses 7 angeordnet. Auf dieser Seite BS erfolgt über den hohlzylindrisch ausgeführten Wellenteil 5b u.a. eine Kühlmittelzufuhr zur Kühlung der supraleitenden Wicklung 10 von außerhalb der Maschine. Einzelheiten der Kühlmittelzufuhr und der Abdichtung sind bekannt. Auf eine detaillierte Darstellung wurde deshalb in der Figur verzichtet. Ein den Wicklungsträger 9 mit der supraleitenden Wicklung 10 umschließendes Vakuum ist mit V bezeichnet. Das Vakuum ist insbesondere zwischen dem warmen Rotoraußengehäuse 7 und dem Wicklungsträger 9 vorhanden. Auf die Darstellung weiterer, bekannter Maßnahmen zu einer thermischen Isolation wie z.B. einer Superisolation wurde verzichtet.

Zur Verminderung der Wärmeeinleitung von dem auf Raumtemperatur befindlichen, warmen Seitenteilen 7a und 7b des Rotoraußengehäuses in den auf Tieftemperatur befindlichen kalten Teil des Wicklungsträgers 9 und damit in die kalte Wicklung 10 kommen vorteilhaft Teile aus GFK in Frage. Eine spezielle Ausführungsform einer Verbindungseinrichtung 8a auf der Antriebsseite AS geht aus dem Längsschnitt der Figur 2 hervor. Die Verbindungseinrichtung 8b auf der Nicht-Antriebsseite BS kann entsprechende Merkmale aufweisen. Sie sollte darüber hinaus so ausgestaltet sein, dass ein axialer Dehnungsausgleich auf Grund von Schrumpfungen der abgekühlten Rotorteile ermöglicht wird.

Die zwischen dem Wicklungsträger 9 und dem Seitenteil 7a einzufügende, im wesentlichen hohlzylinderförmig gestaltete Verbindungseinrichtung 8a weist gemäß Figur 2 an ihren beiden gegenüberliegenden axialen Enden jeweils ein flanschartiges Endstück 12a bzw. 12b auf, wobei sich zwischen diesen Endstücken ein Verbindungselement 12c erstreckt. Während die Endstücke 12a und 12b aus einem metallischen Material wie insbesondere Stahl oder einem anderen tieftemperaturgeeigneten, dauerfesten Werkstoff bestehen, ist das Verbindungselement 12c insbesondere aus GFK gefertigt. Das Verbindungselement ragt an seinen beiden axialen Stirnseiten mit aus den Figuren 4 bis 6 näher hervorgehenden Endteilen 16a und 16b in entsprechende Ausnehmungen oder Nuten 13a bzw. 13b des jeweils zugeordneten Endstücks hinein und ist dort erfindungsgemäß mit diesem Endstück verbunden.

Zur Übertragung hoher Drehmomente zwischen den flanschartigen Endstücken 12a und 12b und dem Wicklungsträger 9 bzw. dem antriebsseitigen Seitenteil 7a wird das jeweils flanschartige Endstück 12a bzw. 12b an dem Wicklungsträger 9 bzw. dem Seitenteil 7a nicht nur angeschraubt. In den Figuren 2 und 3 sind entsprechende Bohrungen für die Verschraubung der flanschartigen Endstücke allgemein mit 15i bezeichnet. Vielmehr besitzt jedes Endstück vorteilhaft eine stirnseitige, aus der Seitenaufsicht der Figur 3 ersichtliche Verzahnung 14 mit hervorstehenden Zähnen 14a und dazwischen liegenden nutenartigen Zwischenräumen 14b. Die Verzahnung ist dabei in an sich bekannter Weise so ausgebildet, dass eine kraftschlüssige, sich selbst zentrierende Verbindung erreicht wird, wobei das Moment auf einem relativ großen Radius weitergegeben werden kann. Die Gegenfläche des Wicklungsträgers 9 bzw. des Seitenteils 7a weist eine entsprechende Verzahnung auf, wobei die Zähne 14a der Verzahnung 14 des flanschartigen Endstücks 12a in entsprechende Nuten in der Gegenfläche des Wicklungsträgers eingreifen.

Insbesondere müssen auch zwischen dem Verbindungselement 12c aus GFK und den flanschartigen Endstücken 12a bzw. 12b hohe Drehmomente der Maschine übertragen werden können. Die erfindungsgemäßen Maßnahmen sind hierauf gerichtet. Dementsprechend sind die in die Endstücke hineinragenden stirnseitigen Enden des Verbindungselementes besonders gestaltet. Wie aus der Frontansicht der Figur 4 und der Schrägansicht der Figur 5 sowie der Längsschnittansicht der Figur 6 hervorgeht, weist das hohlzylinderförmige Verbindungselement 12c an seinen beiden axialen Stirnseiten besonders gestaltete Endteile 16a und 16b auf. Diese Endteile sind in Umfangsrichtung abweichend von einer glatten (ungewellten) Ringform eines rohrförmigen Mittelteils 16c so strukturiert bzw. geformt, dass in Umfangsrichtung gesehen eine regelmäßige Wellung mit Erhebungen 17j und Vertiefungen 18j erhalten wird (vgl. insbesondere Figur 4). Eine solche Wellung kann vorzugsweise bei der Herstellung des Verbindungselementes durch entsprechende Formgebung im noch verformbaren Zustand eingeprägt werden, wobei vorteilhaft die Faserverstärkung nicht beschädigt wird und so die mechanische Stabilität des Verbundwerkstoffes erhalten bleibt. Das Verbindungselement 12c mit seinem Mittelteil 16c und seinen stirnseitigen Endteilen 16a und 16b ist somit einstückig ausgebildet. Die für die Figuren zugrunde gelegte Wellung der Endteile ist aus Gründen einer guten Drehmomentübertragung vorzugsweise sinusförmig und insbesondere über den gesamten Umfang gleichmäßig verteilt. Gegebenenfalls können jedoch auch andere Wellenformen vorgesehen werden, und auch der Umfang braucht nur in einzelnen Bereichen mit einer Wellung versehen zu werden.

Die Enden des Verbindungselementes 12c mit seinen gewellten Endteilen werden in die ringförmigen, nutenartigen Ausnehmungen 13a bzw. 13b des jeweiligen flanschartigen Endstückes eingepasst. Um dort einen guten Kraftschluss zwischen den Endstücken 12a und 12b und dem Verbindungselement 12c zu gewährleisten, weist die jeweilige Ausnehmung des Endstücks an ihrer radial gesehen äußeren Seitenwand und/oder ihrer gegenüberliegenden inneren Seitenwand eine der Wellung des jeweiligen Endteils 16a bzw. 16b entsprechende Wellung auf. An zumindest eine dieser Wände wird das jeweilige Endteil formschlüssig angelegt. Hierzu werden die verbleibenden Zwickelräume zwischen den Seitenwänden der Ausnehmungen und den gewellten Endteilen mit einer Füllung aus einem Klebermaterial, vorzugsweise einem aushärtbaren Kunststoff ausgefüllt. Es ergeben sich so bei einseitig gewellten Ausnehmungen keilartige Füllstücke.

Erfindungsgemäß sollen die nutartigen Ausnehmungen eine derartige Nuttiefe aufweisen, dass nicht nur die Endteile des Verbindungselementes vollständig in ihnen untergebracht werden können, sondern dass auch noch ein Stück des Mittelteils 16c in jede Ausnehmung hineinragt. Hierzu muss die Ausnehmung selbstverständlich eine gegebenenfalls auch gestufte Weite besitzen, dass in sie sowohl das jeweilige Endteil als auch ein Stückweit das Mittelteil einzuführen ist. Das Stück des eingeführten Mittelteils wir dort ebenfalls mit dem jeweiligen metallischen Endstück verklebt. Auf diese Weise sind besondere kräftemäßige Belastungen des Übergangsbereichs von dem gewellten Endteil auf den ungewellten Mittelteil zu verhindern. Eine effektive Drehmomentübertragung zwischen den metallischen Endstücken 12a und 12b und dem nicht-metallischen Verbindungselement 12c ist so gewährleistet, ohne dass eine Gefahr von Beschädigungen der Verbindungsbereiche zwischen diesen Teilen bei auftretenden hohen Torsionskräften besteht. Außerdem wird dabei einer eventuellen Rissbildung an Kanten vorgebeugt.

Selbstverständlich sind auch andere Ausgestaltungen der Endteile des Verbindungselementes und damit der zugeordneten Öffnung des jeweiligen Endstückes möglich, soweit in Umfangsrichtung gesehen und in dieser Richtung regelmäßig verteilt ineinander greifende Erhebungen und Vertiefungen der zu verbindenden Teile ein gegenseitiges Verdrehen in Umfangsrichtung ausschließen und die geforderte Drehmomentübertragung gewährleisten. Insbesondere mit der in den Figuren 4 bis 6 gezeigten Wellung sind diese Forderungen zu erfüllen. Aber auch besondere Verzahnungen sind denkbar.

Bei dem gewählten Ausführungsbeispiel wurde davon ausgegangen, dass für das Verbindungselement 12c ein glasfaserverstärkter Kunststoff (GFK) verwendet wird. Selbstverständlich sind auch mit anderen Fasern wie z.B. mit Kohlenstofffasern verstärkte Kunststoffe einsetzbar, sofern mit diesen Materialien die Drehmomentübertragung bei gleichzeitig geringer Wärmeübertragung zu gewährleisten ist.

Darüber hinaus kann die erfindungsgemäße Verbindungseinrichtung auch statt eines einzigen hohlzylindrischen Verbindungselementes mehrere, sich konzentrisch umschließende Elemente aufweisen, denen gegebenenfalls auch eigene flanschartige, sich konzentrisch umschließende Endstücke zugeordnet sind.

## Patentansprüche

1. Maschine
• mit einem um eine Rotationsachse drehbar gelagerten Rotor, der
a) ein Rotoraußengehäuse hat, das an axialen Rotorwellenteilen befestigt ist und einen Wicklungsträger mit einer supraleitenden Wicklung umschließt,
und
b) Mittel zur Halterung des Wicklungsträgers innerhalb des Rotoraußengehäuses aufweist, die auf einer drehmomentübertragenden Seite eine starre Verbindungseinrichtung zwischen dem Wicklungsträger und dem zugeordneten Rotorwellenteil mit mindestens einem drehmomentübertragenden, hohlzylindrischen Verbindungselement aus einem mit Fasermaterial verstärkten Kunststoff umfassen,
sowie
• mit Mitteln zur Kühlung und thermischen Isolation der supraleitenden Wicklung, wobei
- dass das Verbindungselement (12c) einstückig aus stirnseitigen Endteilen (16a, 16b) und einem dazwischen liegenden Mittelteil (16c) besteht,
- und die flanschartigen Endstücke (12a, 12b) mit einem zugehörenden Teil des Wicklungsträgers (9) bzw. einem mit dem Rotorwellenteil (5a) verbundenen Seitenteil (7a) des Rotoraußengehäuses (7) kraftschlüssig zu verbinden sind.
- dass das Verbindungselement (12c) an den Endteilen (16a, 16b) mit flanschartigen Endstücken (12a, 12b) aus Metall kraftschlüssig ineinander greifend verbunden ist, **dadurch gekennzeichnet**
- dass die Endteile (16a, 16b) in Umfangsrichtung gesehen eine Wellenform aufweisen, während der Mittelteil (16c) ungewellt ist, und, dass
α) die Endteile (16a, 16b) vollständig und der Mittelteil (16c) jeweils ein Stückweit in nutartige Ausnehmungen (13a, 13b) des jeweiligen flanschartigen Endstücks (12a bzw. 12b) hineinragen,
β) zumindest eine Seitenwand jeder Ausnehmung eine an die Wellenform des jeweiligen Endteils angepasste Wellenform aufweist,
γ) jeder Endteil wenigstens teilweise mit seiner Wellenform an der Wellenform der Seitenwand der entsprechenden Ausnehmung anliegt, und
δ) die in den Ausnehmungen angeordneten Teile des Verbindungselementes (12c) mittels einer zumindest teilweisen Füllung der verbleibenden Räume der Ausnehmungen fixiert sind,

2. Maschine nach Anspruch 1, **gekennzeichnet durch** eine in Umfangsrichtung gesehen gleichmäßige Wellenform der Endteile (16a, 16b).

3. Maschine nach Anspruch 1 oder 2, **gekennzeichnet durch** eine in Umfangsrichtung gesehen sinusartige Wellenform der Endteile (16a, 16b).

4. Maschine nach einem der vorangehenden Ansprüche, **dadurch gekennzeichnet , dass** das Verbindungselement (12c), 12b) in den nutartige Ausnehmungen (13a, 13b) der flanschartigen Endstücke (12a bzw. 12b) verklebt ist.

5. Maschine nach einem der vorangehenden Ansprüche, **dadurch gekennzeichnet , dass** die flanschartigen Endstücke (12a, 12b) jeweils mit einer stirnseitigen Verzahnung (14) versehen sind, die in eine entsprechende Verzahnung des zugehörenden Teils des Wicklungsträgers (9) bzw. des mit dem Rotorwellenteil (5a) verbundenen Seitenteils (7a) des Rotoraußengehäuses (7) eingreift.

6. Maschine nach Anspruch 5, **dadurch gekennzeichnet, dass** die Verzahnung sich selbst zentrierend ausgebildet ist.

7. Maschine nach einem der vorangehenden Ansprüche, **dadurch gekennzeichnet , dass** sich zumindest der größere Teil der Fasern des Fasermaterials ununterbrochen über jeden Übergangsbereich zwischen dem jeweiligen Endteil (16a bzw. 16b) und dem Mittelteil (16c) des Verbindungselementes (12c) erstreckt.

8. Maschine nach einem der vorangehenden Ansprüche, **dadurch gekennzeichnet , dass** das Fasermaterial des Verbindungselementes (12c) Glasfasern oder Kohlenstofffasern sind.

9. Maschine nach einem der vorangehenden Ansprüche, **dadurch gekennzeichnet , dass** die flanschartigen Endstücke (12a, 12b) aus einem Stahl bestehen.

10. Maschine nach einem der vorangehenden Ansprüche, **dadurch gekennzeichnet , dass** die Leiter der supraleitenden Wicklung (10) metallisches Niedrig-T_{c}-Supraleitermaterial oder metalloxidisches Hoch-T_{c}-Supraleitermaterial enthalten.

11. Maschine nach einem der vorangehenden Ansprüche, **dadurch gekennzeichnet , dass** der Wicklungsträger (9) von einem Vakuum (V) umgeben ist.

## Claims

1. Machine
• having a rotor which is mounted such that it can rotate about a rotation axis and
a) has a rotor outer housing which is attached to axial rotor shaft parts and encloses a winding former with a superconducting winding,
and
b) has means for holding the winding former within the rotor outer housing, which means comprise a rigid connecting device, on a torque-transmitting side, between the winding former and the associated rotor shaft part with at least one torque-transmitting, hollow-cylindrical connecting element composed of a plastic reinforced with fiber material,
and
• having means for cooling and thermal insulation of the superconducting winding, in which
- the connecting element (12c) is formed integrally from end-face end parts (16a, 16b) and a center part (16c) located in between them,
- and the flange-like end pieces (12a, 12b) can be connected in a power-transmitting manner to an associated part of the winding former (9) and/or to a side part (7a), which is connected to the rotor shaft part (5a), of the rotor outer housing (7),
- the connecting element (12c) is connected on the end parts (16a, 16b) to flange-like end pieces (12a, 12b) composed of metal such that they engage in one another in a power-transmitting manner, **characterized in that**
- **in that** the end parts (16a, 16b) have a corrugated shape seen in the circumferential direction, while the center part (16c) is not corrugated, and that
α) the end parts (16a, 16b) projecting completely and the center part (16c) in each case projecting to a certain extent into groove-like recesses (13a, 13b) in the respective flange-like end piece (12a or 12b),
β) at least one side wall of each recess having a corrugated shape which is matched to the corrugated shape of the respective end part,
γ) the corrugated shape of each end part resting at least partially on the corrugated shape of the side wall of the corresponding recess, and
δ) those parts of the connecting element (12c) which are arranged in the recesses being fixed by means of at least partial filling of the remaining areas of the recesses.

2. Machine according to claim 1, **characterized by** the end parts (16a, 16b) having a uniform corrugated shape seen in the circumferential direction.

3. Machine according to claim 1 or 2, **characterized by** the end parts (16a, 16b) having a sinusoidal corrugated shape seen in the circumferential direction.

4. Machine according to one of the preceding claims, **characterized in that** the connecting element (12c, 12b) is adhesively bonded into the groove-like recesses (13a, 13b) in the flange-like end pieces (12a and 12b, respectively).

5. Machine according to one of the preceding claims, **characterized in that** the flange-like end pieces (12a, 12b) are each provided with an end-face tooth system (14) which engages in a corresponding tooth system on the associated part of the winding former (9) or of that side part (7a) of the rotor outer housing (7) which is connected to the rotor shaft part (5a).

6. Machine according to claim 5, **characterized in that** the tooth system is designed to be self-centring.

7. Machine according to one of the preceding claims, **characterized in that** at least the majority of the fibers of the fiber material extend without any interruption over each transitional area between the respective end part (16a or 16b) and the center part (16c) of the connecting element (12c).

8. Machine according to one of the preceding claims, **characterized in that** the fiber material of the connecting element (12c) is glass fibers or carbon fibers.

9. Machine according to one of the preceding claims, **characterized in that** the flange-like end pieces (12a, 12b) are composed of a steel.

10. Machine according to one of the preceding claims, **characterized in that** the conductors of the superconducting winding (10) contain metallic low-T_{c} superconductor material or metal-oxide high-T_{c} superconductor material.

11. Machine according to one of the preceding claims, **characterized in that** the winding former (9) is surrounded by a vacuum (V).

## Revendications

1. Machine
• ayant un rotor qui est monté tournant autour d'un axe de rotation et qui
a) a un carter extérieur de rotor fixé à des parties axiales d'arbre de rotor et entourant un support d'enroulement ayant un enroulement supraconducteur,
et
b) des moyens de maintien du support d'enroulement dans le carter extérieur de rotor, qui comprennent, d'un côté transmettant un couple de rotation, un dispositif de liaison rigide entre le support d'enroulement et la partie d'arbre de rotor associée, ayant au moins un élément de liaison cylindrique, creux de transmission de couple de rotation, en une matière plastique renforcée par de la fibre,
ainsi que
• ayant des moyens de refroidissement et d'isolation thermique de l'enroulement supraconducteur, dans laquelle
- l'élément (12c) de liaison est constitué d'un seul tenant de parties (16a, 16b) d'extrémité du côté frontal et d'une partie (16c) médiane entre elles,
- et les pièces (12a, 12b) d'extrémité de type à bride peuvent être reliées à complémentarité de force avec une partie associée du support (9) d'enroulement ou avec une partie (7a) latérale du carter (7) extérieur de rotor, qui est reliée à la partie (5a) d'arbre de rotor,
- en ce que l'élément (12c) de liaison aux parties (16a, 16b) d'extrémité est relié aux pièces (12a, 12b) d'extrémité de type à bride en métal, avec pénétration les uns dans les autres à complémentarité de force, **caractérisée**
- **en ce que** les parties (16a, 16b) d'extrémité ont, vu dans la direction périphérique, une forme ondulée, tandis que la partie (16c) médiane n'est pas ondulée, et en ce que
- l'élément (12c) de liaison aux parties (16a, 16b) d'extrémité est relié à pénétration les uns dans les autres à complémentarité de force aux pièces (12a, 12b) d'extrémité de type à bride en métal et en ce que,
α les parties (16a, 16b) d'extrémité font saillie complètement et la partie (16c) médiane, respectivement, un peu dans des évidements (13a, 13b) en forme de gorges de la pièce (12a ou 12b) d'extrémité respective de type à bride,
β au moins une paroi latérale de chaque évidement a une forme ondulée adaptée à la forme ondulée de la partie d'extrémité respective,
γ chaque partie d'extrémité s'applique au moins en partie par sa forme ondulée à la forme ondulée de la paroi latérale de l'évidement correspondant, et
δ les parties de l'élément (12c) de liaison disposées dans les évidements sont immobilisées au moyen d'un remplissage au moins partiel des espaces subsistants des cavités.

2. Machine suivant la revendication 1, **caractérisée par** une forme ondulée uniforme des parties (16a, 16b) d'extrémité, vu dans la direction périphérique.

3. Machine suivant la revendication 1 ou 2, **caractérisée par** une forme ondulée sinusoïdalement des parties (16a, 16b) d'extrémité, vu dans la direction périphériques.

4. Machine suivant l'une des revendications précédentes, **caractérisée en ce que** l'élément (12c, 12b) de liaison est collé dans les évidements (13a, 13b) en forme de gorges des pièces (12a, 12b) d'extrémité de type à bride.

5. Machine suivant l'une des revendications précédentes, **caractérisée en ce que** les pièces (12a, 12b) d'extrémité de type à bride sont munies respectivement d'une denture (14) du côté frontal qui engrène dans une denture correspondante de la partie associée du support (9) d'enroulement ou de la partie (7a) latérale du carter (7) extérieur de rotor, reliée à la partie (5a) d'arbre de rotor.

6. Machine suivant la revendication 5, **caractérisée en ce que** la denture est constituée de manière à s'autocentrer.

7. Machine suivant l'une des revendications précédentes, **caractérisée en ce qu'**au moins la plus grande partie des fibres s'étend d'une manière ininterrompue sur chaque zone de transition entre la partie (16a ou 16b) d'extrémité respective et la partie (16c) médiane de l'élément (12c) de liaison.

8. Machine suivant l'une des revendications précédentes, **caractérisée en ce que** la fibre de l'élément (12c) de liaison est une fibre de verre ou une fibre de carbone.

9. Machine suivant l'une des revendications précédentes, **caractérisée en ce que** les pièces (12a, 12b) d'extrémité de type à bride sont en acier.

10. Machine suivant l'une des revendications précédentes, **caractérisée en ce que** les conducteurs de l'enroulement (10) supraconducteur contiennent du matériau supraconducteur métallique à basse T_{c} ou du matériau supraconducteur en oxyde métallique à haute T_{c}.

11. Machine suivant l'une des revendications précédentes, **caractérisée en ce que** le support (9) d'enroulement est entouré d'un vide (V).
